# EUROPEAN PATENT SPECIFICATION

(11) **EP 4 459 242 B1**
(45) Date of publication and mention of the grant of the patent: **19.11.2025**
(21) Application number: 24173429.2
(22) Date of filing: 30.04.2024
(51) Int. Cl.: G01F 23/292, A47J 37/06

(54) **OPTOELECTRONIC LIQUID LEVEL DETECTION**
OPTOELEKTRONISCHE FLÜSSIGKEITSSTANDSERKENNUNG
DETECTION OPTOÉLECTRONIQUE DU NIVEAU DE LIQUIDE

(30) Priority: 04.05.2023 CN 202321057883 U
(43) Date of publication of application: 06.11.2024
(73) Proprietor: Zhejiang Biyi Electric Appliance Co., Ltd., Yuyao, Zhejiang 315400 (CN)
(72) Inventor: MAN, Kaimong, Yuyao 315400 (CN); LOU, Hongxian, Yuyao 315400 (CN); ZANG, Hao, Yuyao 315400 (CN)
(74) Representative: ZHAOffice SPRL

(56) References cited:
- CN-A- 113 884 163
- DE-A1- 10 019 223
- DE-A1- 102009 041 650
- US-A- 4 246 489
- US-B1- 6 361 136
- US-B2- 9 086 312

## Description

### FIELD OF TECHNOLOGY

The present invention relates to Optoelectronic Liquid Level Detection.

### BACKGROUND OF THE INVENTION

An air fryer is a new household appliance for food frying by using high-speed air circulation, the food cooked by air fryer can reduce 80% of the oil and fat compared to traditional electric fryer. An air fryer is also easy to clean and its safety feature and affordable cost are highly favored. Certain air fryers now available in the market are equipped with oil or water spraying structure in the head portion on top of the inner body.

As disclosed in Chinese patent literature, application number 202010219197.3, application publication date July 03, 2020 , and invention name "A water structure for an air fryer with steaming and boiling function"; For example, the application number 202222493575. 4 disclosed in Chinese patent literature, with an authorization announcement date of March 28, 2023 , and the utility model name "Micro Spray Air Fryer". Other household appliances such as electric steam stoves also have water tanks, such as the application number 202122988455.7 disclosed in Chinese patent literature, with an authorization announcement date of July 22, 2022 , and the utility model name "Detection type water supply tank assembly and electric steam stove".

These products rarely use the integrated structure of water and oil tanks, so the liquid levels in oil and water tanks are hard to detect and monitor accurately and automatically. Chinese patent application CN 113884163 discloses a liquid level detection device for detection of liquid level in a liquid storage container. The liquid level detection device comprises a body which in turn comprises a reflective surface, a light emitting unit for emission of incident light to the reflective surface, a light receiving unit for receiving reflected light from the incident light reflected by the reflective surface. The device determines the level of liquid stored in the container, based on the reflected light. The examples relate to water level detection in a water tank. According to disclosed embodiments, the light emitting unit is a light emitting diode and the light receiving unit is a phototransistor.
US4246489 discloses a liquid level detector which comprises a refractor body, a light emitting element and a photoelectric conversion element for converting reflected light into an electric signal. The light emitting element is an infrared light-emitting diode, and the photoelectric conversion element is a silicon photodiode, photo-transistor or photo-integrated circuit.

### SUMMARY OF THE INVENTION

To overcome the above deficiencies, the object of the present invention is to provide a multifunctional air fryer with double nozzles, so as to tackle with the problem that the air fryer products consumers have poor experience in tasting different sorts of food; and the technical problem that these products rarely use the integrated structure of water and oil tanks, so the liquid levels in oil and water tanks are hard to detect and monitor accurately and automatically. The object is attained by the technical solutions as described below.

An optoelectronic liquid detection system and a multifunctional air fryer comprising such an optoelectronic liquid detection system, according to the invention are defined in the attached claims.

The said water tank is preferably symmetrically provided with the said triple prism beveled surface at the bottom of the water tank, the said triple prism comprising beveled surfaces A and B angled at 90°, and the infrared sensors of the Hall photoelectric sensor are aligned to the said triple prism beveled surfaces respectively. The above structure may comprise two triple prism beveled surfaces, and two infrared sensors and the Hall photoelectric sensor to further improve the accuracy of liquid level detection in the water tank.

The said oil tank is preferably arranged in the middle of the water tank as one piece, the oil tank is full transparent or light-colored transparent, a raised groove for the said triple prism beveled surface is disposed at the bottom of the oil tank, and the said valve is provided at where the bottom of the oil tank is connected to the pipe coupling. An embodiment of the one-piece structure of the oil tank and the water tank is described above, where the water tank and the oil tank adopt the embodiment of one-piece roundabout dual tank structure. Thereby, the said Hall photoelectric sensor at the bottom of the water tank and the said infrared sensor can simultaneously detect the liquid level in the oil tank.

The said water tank and the oil tank in the water tank are preferably in round shape. An embodiment of a one-piece round structure of water tank and oil tank is described below with other existing structures as alternative.

According to an embodiment of the invention, the said oil tank is inserted in the tank cavity in the middle of the water tank, the said valves are arranged in the oil tank and at the bottom of the water tank ring cavity around the outer diameter of the water tank respectively, second rings are disposed at the valve and the joint where the pipe couplings are engaged respectively, an oil tank cover and a water tank cover are disposed in the tank and on top of the water tank ring cavity around the outer diameter of the oil tank respectively, and the first seal ring and the third seal ring are disposed in the cover opening at the joint. An embodiment of the round structure of water tank and oil tank is described above.

The structure of the present invention is reasonably designed with deep fry and soft baking, accurate control of oil and water, and high accuracy level of liquid detection in water or oil tank, which suggest an extensive use of the air fryer; it mainly serves as a an optoelectronic liquid level detection system, as well as structural modification of similar products.

### ACCOMPANYING DRAWINGS

- FIG. 1 is an example explosion structure diagram.
- FIG. 2 is a schematic diagram of the sectional structure of FIG. 1 .
- FIG. 3 is an exploded structural schematic diagram of the integrated roundabout dual tank structure of FIG. 2 with water and oil tanks.
- FIG. 4 is a schematic diagram of the assembled sectional view structure of FIG. 1 .

Serial numbers and designations of the accompanying drawings: Oil tank cover, 2. First sealing ring, 3. Oil tank, 4. Hall photoelectric sensor, 5. Second sealing ring, 7. Valve, 8. Water tank,9. Third sealing ring, A. First triple prism beveled surface, B. Second triple prism beveled surface, C. First infrared sensor, D. Second infrared sensor.

### EMBODIMENTS

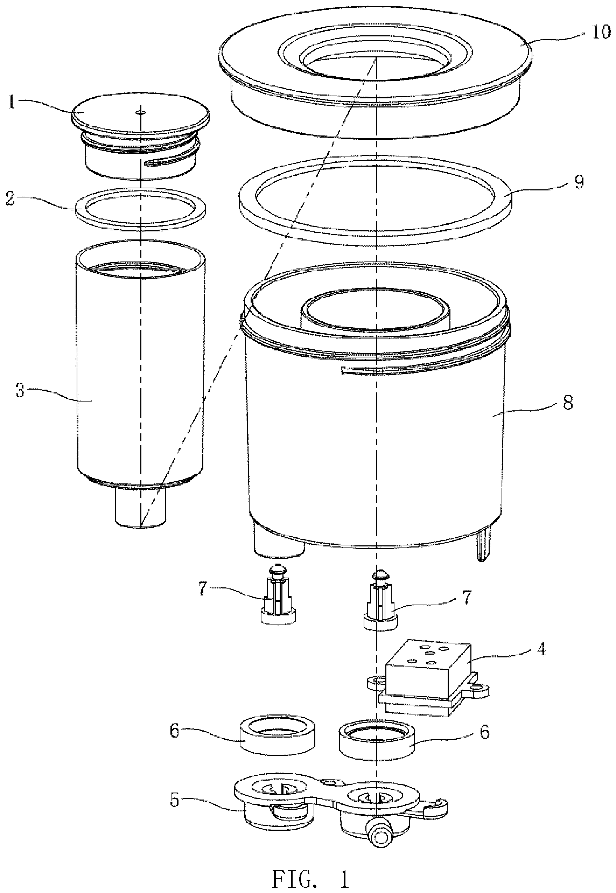

As referred to in FIGS. 1-4 , the round structure with dual connected tanks of this air fryer comprises a water tank and an oil tank, the water, oil tank is full transparent or light-colored transparent, the valves are disposed at the bottom of the water tank and at the joint where the oil tank is connected to the pipe coupling respectively, the water tank and the oil tank in the water tank are in round shape. A triple prism beveled surface is provided in the middle of the bottom of the water tank with at least one side raised upward, the said triple prism beveled surfaces A and B angle at 90°, a Hall photoelectric sensor is provided at the bottom of the water tank below the triple prism beveled surface, which means the first triple prism beveled surface A and the second triple prism beveled surface B angle at 90°, the first infrared sensor C , the second infrared sensor D is disposed on top of the Hall photoelectric sensor respectively, and the infrared sensors are aligned to the said triple prism beveled surfaces respectively. The said tank is inserted in the tank cavity in the middle of the water tank, the said valves are set in the tank and at the bottom of the water tank ring cavity around the outer diameter of the water tank respectively, the second rings 16 are disposed at the valve and the joint where the pipe couplings are engaged respectively, the oil tank cover and the water tank cover are disposed in the tank and on top of the water tank ring cavity around the outer diameter of the oil tank respectively, and the first sealing ring and the third sealing ring are disposed in the cover opening at the joint.

The said oil tank and water tank are made of all-transparent or light-colored transparent food-grade materials, and there is a one-piece transparent triple prism beveled surface in the oil tank or water tank, and the said triple prism beveled surfaces A and B angle at 90° . When the liquid in the water tank is submerging or lower than said triple prism beveled surface, the Hall photoelectric sensor feeds back a different electrical signal through the infrared sensor to detect the liquid level in the water tank and reduce the residual liquids in tank, which means a higher sensitivity of detection.

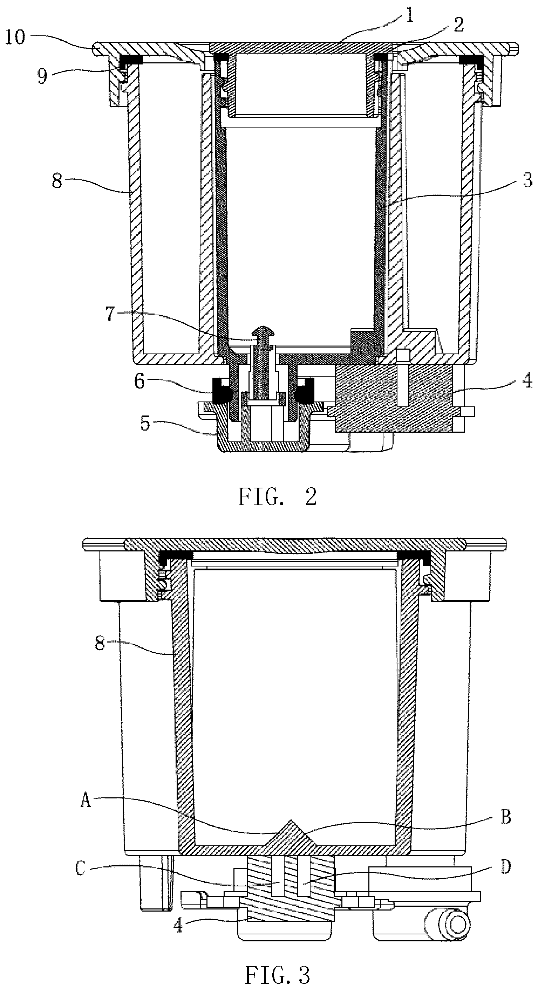

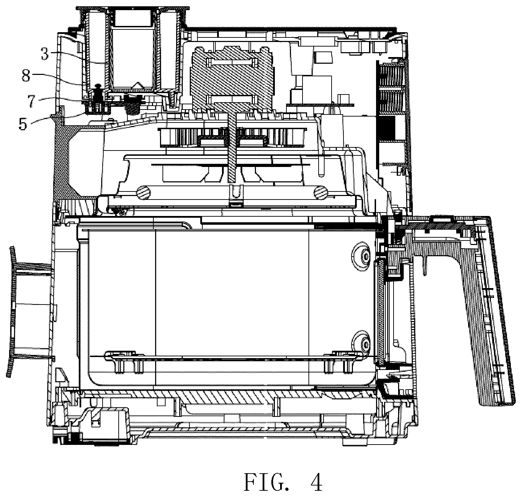

In figure 3 an embodiment is illustrated in which the triple prism beveled surfaces are provided in the water tank 8, in figure 4 an embodiment is illustrated in which the triple prism beveled surfaces are provide in oil tank 3.

## Claims

1. An optoelectronic liquid level detection system comprising
a water tank (8) and an oil tank (3), the oil tank (3) being located in the middle of the water tank (8), and the oil tank (3) being full transparent or light-colored transparent**,**
a triple prism beveled surface provided at the bottom of the water tank (8) or at the bottom of the oil tank (3) with at least one side raised upward, wherein a raised groove for the said triple prism beveled surface is disposed at the bottom of the oil tank,
a valve (7) provided at the connection of the bottom of the oil tank to a pipe coupling (5), a Hall photoelectric sensor (4) provided at the bottom of the water tank or oil tank below the triple prism beveled surface,
an infrared sensor provided on top of the Hall photoelectric sensor, the infrared sensor being aligned with the said triple prism beveled surface;
wherein when the liquid in the water or oil tank is submerging or lower than said triple prism beveled surface, the Hall photoelectric sensor is designed to feed back a different electrical signal through the infrared sensor to detect the liquid level in the water or oil tank.

2. An optoelectronic liquid level detection system according to Claim 1, wherein said water tank (8) is symmetrically provided with the said triple prism beveled surface at the bottom of the water tank, the said triple prism comprising beveled surfaces A and B angle at 90°, and the infrared sensor of the Hall photoelectric sensor (4) is aligned to the said triple prism beveled surface.

3. An optoelectronic liquid level detection system according to Claim 1, wherein the said oil tank (3) is set in the middle of the water tank (8) as one piece.

4. An optoelectronic liquid level detection system according to Claim 3, wherein the said water tank (8) and the oil tank (3) in the water tank are of round shape.

5. An optoelectronic liquid level detection system according to Claim 4, wherein the said oil tank (3) is inset in a tank cavity in the middle of the water tank (8), a further valve (7) being arranged in the tank and at the bottom of the water tank ring cavity around the outer diameter of the water tank respectively, second sealing rings (6) being disposed at the valve and the connection with the pipe couplings (5) respectively, the oil tank cover (1) and the water tank cover (10) being disposed on the oil tank and on top of the water tank ring cavity around the outer diameter of the oil tank respectively, and a first sealing ring (2) and a third sealing ring (9) being disposed in the cover opening each time at the joint between cover and tank.

6. A multifunctional air fryer with double nozzles comprising an optoelectronic liquid level detection system according to any one of the claims 1 to 5 wherein the said infrared sensor, the Hall photoelectric sensor, and the valve are connected to the air fryer through wires respectively, the valve is a DC valve or an electromagnetic valve.

## Patentansprüche

1. Optoelektronische Flussigkeitsstandserkennungssystem umfassend:
einen Wasserbehälter (8) und einen Ölbehälter (3), wobei der Ölbehälter (3) in der Mitten des Wasserbehälters (8) gelegen ist, und der Ölbehälter (003) völlig lichtdurchlässig, oder hellfarbig und lichtdurchlässig ist, eine abgeschrägte Tripelprismenoberfläche am Boden des Wasserbehälters (8) oder am Boden des Ölbehälters (3) mit zu mindestens einer nach oben erhobenen Seite vorgesehen, wobei eine erhobene Nut für diese abgeschrägte Tripelprismenoberfläche auf dem Boden des Ölbehälters angeordnet ist, ein Ventil (7) auf der Verbindung des Bodens des Ölbehälters mit einer Rohrkupplung (5) vorgesehen, eine Hall-Lichtschranke (4) am Boden des Wasserbehälters oder des Ölbehälters unterhalb der abgeschrägten Tripelprismenoberfläche vorgesehen, einen Infrarotsensor über der Hall-Lichtschranke vorgesehen, wobei der Infrarotsensor auf diese abgeschrägte Tripelprismenoberfläche ausgerichtet ist, wobei, wenn die Flüssigkeit im Wasserbehälter oder im Ölbehälter die abgeschrägte Tripelprismenoberfläche untertaucht oder tiefer als diese abgeschrägte Tripelprismenoberfläche ist, die Hall-Lichtschranke zur Rückkopplung eines unterschiedlichen elektrischen Signals über den Infrarotsensors entworfen ist, damit der Flüssigkeitsstand im Wasser- oder Ölbehälter erfasst wird.

2. Optoelektronische Flussigkeitsstandserkennungssystem nach Anspruch 1, wobei dieser Wasserbehälter (8) symmetrisch mit dieser abgeschrägten Tripelprismenoberfläche auf dem Boden des Wasserbehälters ausgestattet ist, wobei dieses Tripelprisma abgeschrägte Oberflächen A und B auf 90° umfasst, und der Infrarotsensor der Hall-Lichtschranke (4) auf diese abgeschrägte Tripelprismenoberfläche ausgerichtet ist.

3. Optoelektronische Flussigkeitsstandserkennungssystem nach Anspruch 1, wobei dieser Ölbehälter (3) inmitten des Wasserbehälters (8) einstückig vorliegt.

4. Optoelektronische Flussigkeitsstandserkennungssystem nach Anspruch 3, wobei dieser Wasserbehälter (8) und dieser Ölbehälter (3) im Wasserbehälter eine runde Form aufweisen.

5. Optoelektronische Flussigkeitsstandserkennungssystem nach Anspruch 4, wobei dieser Ölbehälter (3) in einer Behälterhöhle in der Mitte des Wasserbehälters (8) eingesetzt ist, wobei ein weiteres Ventil (7) jeweils in dem Behälter und auf dem Boden der Wasserbehälterringhöhle um den Außendurchmesser des Wasserbehälters angeordnet ist, zweite Abdichtungsringe (6) jeweils am Ventil und an der Verbindung mit den Rohrkupplungen (5) angeordnet sind, der Ölbehälterdeckel (1) und der Wasserbehälterdeckel (10) jeweils auf dem Ölbehälter und oben auf der Wasserbehälterringhöhle um den Außendurchmesser des Ölbehälters angeordnet sind, und ein erster Abdichtungsring (2) und ein dritter Abdichtungsring (9) in der Deckelöffnung jedes Mal an der Dichtung zwischen Deckel und Behälter angeordnet sind.

6. Multifunktionale Luftfritteuse mit doppelten Düsen, die eine optoelektronische Flussigkeitsstandserkennungssystem nach einem der Ansprüche 1 bis 5 umfasst, wobei dieser Infrarotsensor, diese Hall-Lichtschranke und das Ventil jeweils mit der Luftfritteuse über Drahten verbunden sind, das Ventil ein Gleichstromventil oder ein Electromagnetventil ist.

## Revendications

1. Système de détection optoélectronique de niveau de liquide comprenant :
un réservoir d'eau (8) et un réservoir d'huile (3) situé au milieu du réservoir d'eau (8), et le réservoir d'huile étant complètement transparent ou de couleur claire tout étant transparent, une surface prismatique biseautée triple prévue à la base du réservoir d'eau (8) ou à la base du réservoir d'huile (3) avec au moins une face surélevée vers le haut, où une rainure surélevée pour la surface prismatique biseautée triple est disposée sur le fond du réservoir d'huile, une vanne (7) prévue au raccordement du fond du réservoir d'huile au raccord de tuyau (5), un capteur photoélectrique de Hall (4) prévu sur le fond du réservoir d'eau ou du réservoir d'huile au-dessous de la surface prismatique biseautée triple, un capteur infrarouge prévu à la partie supérieure du capteur photoélectrique de Hall, le capteur infrarouge étant aligné sur ladite surface prismatique biseautée triple ; système dans lequel, lorsque le liquide dans le réservoir d'eau ou d'huile submerge ou est inférieur à ladite surface prismatique biseautée triple, le capteur photoélectrique de Hall est conçu pour renvoyer un signal électrique différent par l'intermédiaire du capteur infrarouge afin de détecter le niveau du liquide dans le réservoir d'eau ou d'huile.

2. Système de détection optoélectronique de niveau de liquide selon la revendication 1, dans lequel ledit réservoir d'eau (8) est pourvu symétriquement de ladite surface prismatique biseautée triple au bas du réservoir d'eau, ledit prisme triple comprenant les surfaces biseautées A et B à 90°, et le capteur infrarouge du capteur photoélectrique de Hall (4) est aligné sur ladite surface prismatique biseautée triple.

3. Système de détection optoélectronique de niveau de liquide selon la revendication 1, dans lequel ledit réservoir d'huile (3) est placé au milieu du réservoir d'eau (8) en tant qu'une seule pièce.

4. Système de détection optoélectronique de niveau de liquide selon la revendication 3, dans lequel ledit réservoir d'eau (8) et le ledit réservoir d'huile (3) sont de forme ronde.

5. Système de détection optoélectronique de niveau de liquide selon la revendication 4, dans lequel ledit réservoir d'huile est inséré dans une cavité de réservoir au milieu du réservoir d'eau (8), une vanne supplémentaire (7) étant disposée respectivement dans le réservoir et au bas de la cavité annulaire du réservoir d'eau autour de diamètre extérieur de réservoir d'eau, de secondes bagues d'étanchéité (6) étant disposées respectivement à la vanne et au raccordement avec les raccords de tuyauterie (5), le couvercle du réservoir d'huile et le couvercle du réservoir d'eau (10) étant disposés respectivement sur le réservoir d'huile et sur la partie supérieure de la cavité annulaire du réservoir d'eau autour du diamètre extérieur du réservoir d'huile, et une première bague d'étanchéité (2) et une troisième bague d'étanchéité (9) étant disposées dans l'ouverture de couvercle à chaque fois à la jointure entre couvercle et réservoir.

6. Friteuse à air avec double embout comprenant un système de détection optoélectronique de niveau de liquide selon l'une quelconque des revendications 1 à 5, dans lequel ledit capteur infrarouge, le capteur photoélectrique de Hall, et la vanne sont connectés respectivement à la friteuse à air par l'intermédiaire de fils électriques, la vanne est une vanne à CC ou une vanne électromagnétique.
